# EUROPEAN PATENT APPLICATION

(11) **EP 1 646 124 A2**
(43) Date of publication of application: **12.04.2006**
(21) Application number: 05021525.0
(22) Date of filing: 30.09.2005
(51) Int. Cl.: H02J 9/06, H02J 7/34

(54) **Power supply circuit and method for stable system turn-off**

(30) Priority: 06.10.2004 KR 2004079312
(71) Applicant: SAMSUNG ELECTRONICS CO., LTD., Suwon-si, Gyeonggi-do (KR)
(72) Inventor: Kang, Bum-Suk, Suwon-si Gyeonggi-do (KR)
(74) Representative: Grünecker, Kinkeldey, Stockmair & Schwanhäusser Anwaltssozietät

(57) **Abstract**

Disclosed are a power supply circuit and method for mobile communication terminals, such as PDAs and portable phones. When a main power source such as a battery is abruptly detached from a system, the abrupt detachment of the main power source is detected and the system is stably turned off only with a backup power source. The power supply circuit includes a first switch for providing a driving voltage from the main power source to the system, a second switch for providing a driving voltage from the backup power source to the system when the main power source is detached from the system, a controller for generating a control signal for opening the first switch and closing the second switch when the main power source is detached from the system, and a memory for storing user data.

## Description

The present invention relates to mobile communication terminals, such as Personal Digital Assistants (PDAs) and portable phones, and more particularly to a power supply circuit and method which, when a main power source such as a battery is abruptly detached from a system, detects the abrupt detachment of the main power source and enables stable system turn-off only by a residual power source.

Recently, with development of telecommunication technology, mobile communication terminals are being widely used. Typical examples of mobile communication terminals include portable phones and Personal Digital Assistants (PDAs).

The PDA is a next generation personal portable device combining a wireless communication function and an information processing function, which is also called a personal information processor or a personal portable communication terminal. A PDA typically provides functions, of a secretarial function enabling management of a personal schedule program; a function for managing personal information by using an electronic pen or hand-writing recognition technology; a reference data source function enabling a simple search of reference data by a built-in dictionary or manual; and a communication function enabling an exchange of e-mail, fax, paging messages and portable phone messages.

An initial PDA product is a Newton developed by the Apple Computer Corporation, which is a handheld-sized portable terminal combining an information processing function and a wireless communication function. Recently, various PDA products have been developed, and a wireless communication service using the same is provided.

Meanwhile, various mobile terminals such as PDAs and portable phones employ a battery as a main power source. However, problems arise when a user abruptly detaches the battery from the mobile terminal or the battery is detached from the mobile terminal by the user's carelessness during the operation of the mobile terminal. Specifically, the mobile terminal cannot detect the detachment of the battery, resulting in the mobile terminal being abruptly turned off, without performing a normal turn-off procedure.

Further a PDA may employ a POCKET PC or similar Operating System (OS), which stores user data in a volatile memory, rather than in nonvolatile memory, such as a Synchronous Dynamic Random Access Memory (SDRAM). Accordingly, if the PDA is abnormally turned off without performing a normal turn-off procedure, the SDRAM cannot perform a self-refresh operation.

When the PDA is normally turned off, a Central Processing Unit (CPU) of the PDA commands the SDRAM to perform a self-refresh operation. In response to the command, the SDRAM performs the self-refresh operation to thereby prevent a loss of user data, which may be caused by abrupt turn-off of the PDA.

However, when the conventional PDA is abnormally turned off, the SDRAM cannot perform the self-refresh operation, thereby causing loss of user data.

It is the object of the present invention to provide an improved power supply circuit and a corresponding method.

This object is solved by the subject matter of the independent claims.

Preferred embodiments are defined in the dependent claims.

According to an aspect of the present invention, when a main power source is abruptly detached from a system, the power supply circuit and the method are for detecting the abrupt detachment of the main power source and for performing a stable system turn-off only by a backup power source, thereby preserving user data and preventing malfunction of the system.

According to an aspect of the present invention, a power supply circuit equipped with a main power source and a backup power source for stably turning off a system includes a first switch for providing a driving voltage from the main power source to the system; a second switch for providing a driving voltage from the backup power source to the system when the main power source is detached from the system; a controller for generating a control signal for opening the first switch and closing the second switch when the main power source is detached from the system; and a memory for storing user data.

The power supply circuit may further include a capacitor for providing a driving voltage to the controller when the main power source is detached from the system.

The capacitor may be charged by the main power source. The capacitor may be connected in parallel to the main power source.

The memory may be an SDRAM and receive power from the backup power source when the main power source is detached from the system.

The controller may receive power from the backup power source when the main power source is detached from the system.

The power supply circuit may further include a main power source detection switch for transmitting a detection signal to the controller when the main power source is detached from the system.

According to another aspect of the present invention, a power supply method for stably turning off a system includes providing a driving voltage charged in a capacitor to a controller when a main power source is detached from the system; providing a driving voltage from a backup power source to the system when the main power source is detached from the system; and performing a refresh command for a memory and then performing a system turn-off operation at the controller.

The driving voltage from the backup power source may be provided to the system by opening a first switch for supplying main power and closing a second switch for supplying backup power.

The capacitor may be charged by the main power source. The capacitor may be connected in parallel to the main power source. Also, the memory may be an SDRAM.

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of a power supply circuit according to an embodiment of the present invention;

Fig. 2 is a block diagram of a power supply circuit for stably supplying power to the system according to an embodiment of the present invention;

Fig. 3 is a block diagram of a power supply circuit for enabling a stable system turn-off when a main battery is abruptly detached from a system, according to an embodiment of the present invention; and

Fig. 4 is a flow diagram illustrating a method for performing a stable system turn-off when the main battery is abruptly detached from a system, according to an embodiment of the present invention.

Reference will now be made in detail to the preferred embodiments of the present invention, examples of which are illustrated in the accompanying drawings. In the drawings, like reference numerals in the drawings denote like elements, and thus their description is not repeated. A detailed description of the related well-known functions and constructions will be omitted for conciseness.

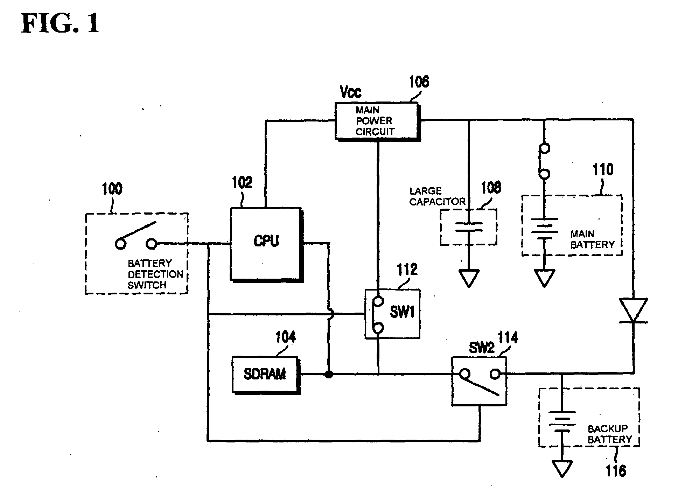

Fig. 1 is a block diagram of a power supply circuit according to an embodiment of the present invention.

Referring to Fig. 1, a battery detection switch 100 detects whether a main battery 110 is detached from a PDA system and then informs a CPU 102 of a detection result. That is, if the main battery 110 is attached to the PDA system, the battery detection switch 100 transmits a signal 'ATTACHED' to the CPU 102. If the main battery 110 is detached from the system, the battery detection switch 100 transmits a signal 'DETACHED' to the CPU 102.

When the main battery 110 is detached from the system, the CPU 102 transmits a refresh command to a device for maintaining data, such as an SDRAM 104. The SDRAM 104 then stores data that is to be preserved, such as user data, and performs a refresh operation for maintaining such necessary or required data.

A main power circuit 106 maintains a voltage of the main battery 110 to a regular voltage so as to enable the PDA system to operate stably. A large capacitor 108 is provided to temporarily supply backup power to the CPU 102 when the main battery 110 is detached from the system, and generally maintains a voltage higher than a driving voltage Vcc. The large capacitor 108 is available to supply voltage until completion of its discharge.

The main battery 110 is the primary power source device, which supplies a driving voltage to the system through the main power circuit 106. A backup battery 116 is a backup power source device, which supplies power to the CPU 102 and the SDRAM 104 when the main battery 110 is detached from the system.

When the main battery 110 is detached from the system, the present invention enables the system to be stably turned off according to the CPU 102's control signals for operation of a first switch 112 and a second switch 114.

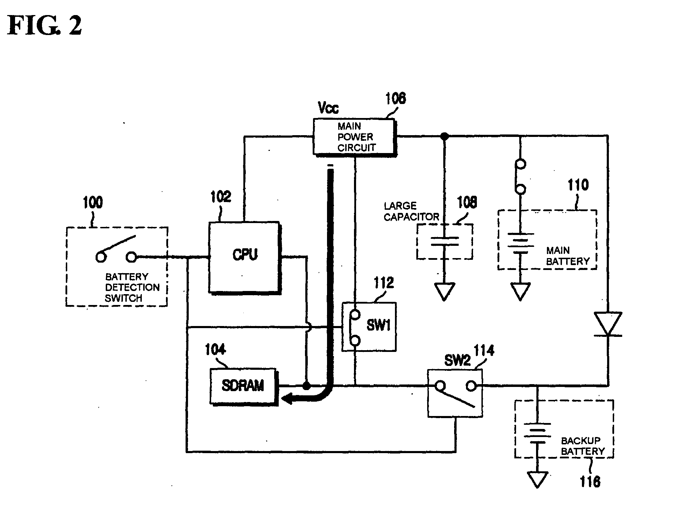

Fig. 2 is a block diagram of a power supply circuit for stably supplying power to the system according to an embodiment of the present invention.

Referring to Fig. 2, the PDA system performs a stable operation while the main battery 110 is normally maintained. The battery detection switch 100 transmits a battery detection signal to the CPU 102 when the main battery 110 is normally maintained. The battery detection switch 100 is constructed to be physically pressed when a user moves, i.e. unlocks, a lock device for the main battery 110, to thereby be able to sense that the main battery is about to be attached to or detached from the system.

Upon reception of the battery detection signal from the battery detection switch 100, the CPU 102 closes the first switch 112 and opens the second switch 114. Accordingly, the main battery 110 supplies power to the system. In detail, the main battery 110 supplies power to the CPU 102 and the SDRAM 104 through the main power circuit 106 and the first switch 112. The main power circuit 106 maintains a voltage of the main battery 110 regularly to thereby supply power to the system.

In the meanwhile, the large capacitor 108 is connected in parallel to the main battery 110 to thereby be charged by the main battery 110. The backup battery 116 cannot supply power to the system according due to the second switch 114 being in an open position.

Consequently, when stably supplying power to the system, the power supply circuit maintains the first switch 112 in a closed position and the second switch 114 in an opened position.

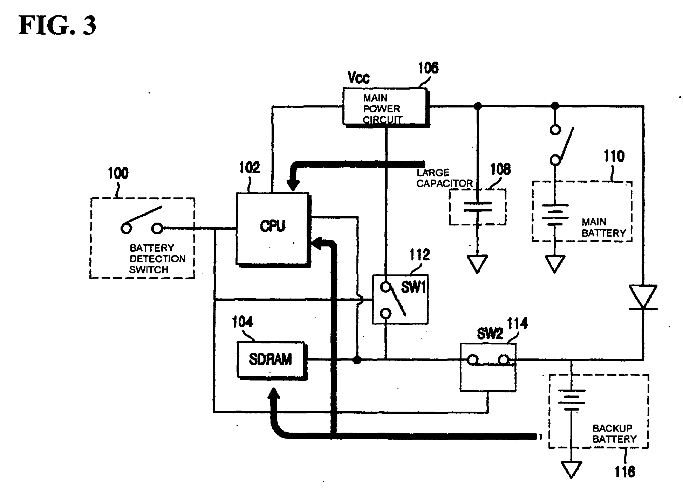

Fig. 3 is a block diagram of a power supply circuit for enabling a stable system turn-off when a main battery is abruptly detached, according to an embodiment of the present invention.

Referring to Fig. 3, the power supply circuit of the present invention enables the PDA system to be stably turned off when the main battery 110 is abruptly detached from the system. For this, when a user abruptly detaches the main battery 110 from the system (or when the main battery 110 is detached from the system by the user's carelessness) during the operation of the system, the battery detection switch 100 detects the abrupt detachment of the main battery 110 to then transmit a signal 'ABRUPTLY DETACHED' to the CPU 102.

Upon receiving the signal 'ABRUPTLY DETACHED' from the battery detection switch 100, the CPU 102 performs a command for opening the first switch 112 and closing the second switch 114.

Accordingly, the first switch 112 is opened and the second switch 114 is closed, whereby the main power circuit 106 does not operate and the backup battery 116 supplies power to the CPU 102 and the SDRAM 104.

Accordingly, the CPU 102 can operate continuously and user data stored in the SDRAM 104 can be preserved. That is, the CPU 102 performs a refresh command for the SDRAM 104 to store necessary data, and the SDRAM 104 stores the necessary data according to the refresh command.

However, if the refresh command is performed only by the backup battery 116, the power consumption of the backup battery 116 becomes great, and, in some cases, the CPU 102 cannot perform the refresh command owing to time consumption caused by the switching operations of the first and second switch 112 and 114.

To prevent this problem, the power supply circuit of the present invention also includes the separate large capacitor 108. As described previously, the large capacitor 108 is connected in parallel to the main battery 110 and is charged by the main battery 100.

When the main battery 110 is detached from the system and the first switch 112 is opened, the large capacitor 108 provides a driving voltage Vcc to the CPU 102 through the main power circuit 106. Here, when the main battery is detached from the system, the provision of the driving voltage Vcc by the large capacitor 108 is instantaneously performed.

Accordingly, even if the backup battery 116 cannot provide a driving voltage Vcc to the CPU 102 owing to the switching time, the large capacitor 108 can provide a driving voltage Vcc to the CPU 102. Upon reception of the driving voltage from the large capacitor 108, the CPU 102 performs a refresh command for the SDRAM 104 to store necessary data. Accordingly, the SDRAM 104 stores important data such as user data, whereby the CPU 102 can perform a stable system turn-off.

In brief, even when the main battery 110 is abruptly detached from the system, the power supply circuit of the present invention provides a driving voltage to the system through the backup battery 116 and the large capacitor 108 by opening the first switch 112 and closing the second switch 114, thereby enabling a stable system turn-off.

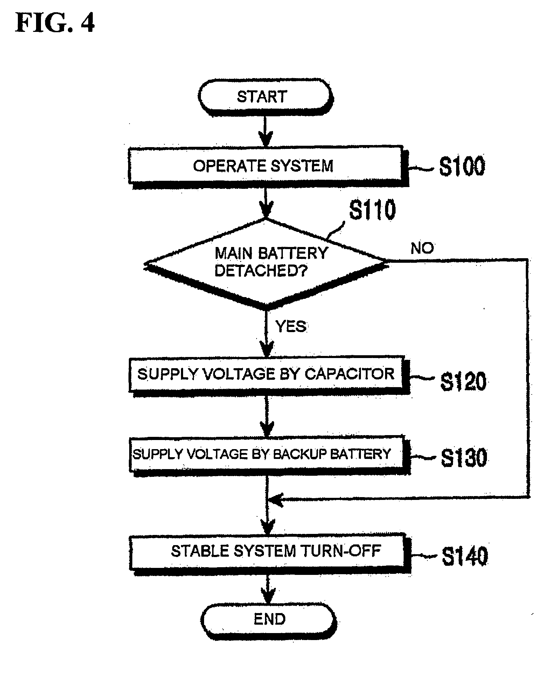

Fig. 4 is a flow diagram illustrating a method for performing a stable system turn-off when the main battery is abruptly detached from the system, according to an embodiment of the present invention.

Referring to Figs. 3 and 4, while the system operates, a user desiring to turn off the system can turn off the system through a normal system turn-off procedure (S100). At this time, the CPU 102 performs a refresh command for the SDRAM 104 to store data. Upon completion of the data storage by the SDRAM 104, the system performs a stable system turn-off.

The present invention also enables a stable system turn-off by using the backup battery 116 and the large capacitor 108 even when the main battery 110 is abruptly detached from the system irrespective of the user's intention.

Accordingly, if the main battery 110 is abruptly detached from the system irrespective of the user's intention during the operation of the system (S110), the CPU 102 receives a signal 'DETACHED' from the battery detection switch 100, and then opens the first switch 112 and closes the second switch 114.

At this time, the large capacitor 108 provides a driving voltage Vcc to the CPU 102 through the main power circuit 106. If the main battery 110 is detached from the system, the provision of a driving voltage Vcc by the large capacitor 108 is instantaneous (S120).

Accordingly, even if the backup battery 116 cannot provide a driving voltage Vcc to the CPU 102 owing to a switching time, the large capacitor 108 provides a driving voltage to the CPU 102. Accordingly, as the second switch is closed, the backup battery 116 provides power to the CPU 102 and the SDRAM 104 (S130).

Accordingly, the CPU 102 can operate continuously and user data stored in the SDRAM 104 can be preserved. That is, the CPU 102 issues a refresh command for the SDRAM 104 to store necessary data, and the SDRAM 104 stores the necessary data according to the refresh command, whereby a stable system turn-off is successfully performed (S140).

As described above, when the main battery is abruptly detached from the system, the power supply circuit and method of the present invention detects the abrupt detachment of the main battery in advance and performs a stable system turn-off only by a backup power source, thereby making it possible to prevent the loss of user data and the malfunction of the system that may be caused by the abrupt detachment of the main battery.

The forgoing embodiments are merely exemplary and are not to be construed as limiting the present invention. The present teachings can be readily applied to other types of apparatus. The description of the present invention is intended to be illustrative, and not to limit the scope of the claims. Many alternatives, modifications, and variations will be apparent to those skilled in the art.

## Claims

1. A power supply circuit equipped with a main power source and a backup power source for stably turning off a system, the power supply circuit comprising:
a first switch for providing a driving voltage from the main power source to the system;
a second switch for providing a driving voltage from the backup power source to the system when the main power source is detached from the system;
a controller for generating a control signal for opening the first switch and closing the second switch when detachment of the main power source from the system is detected; and
a memory for storing user data.

2. The power supply circuit of claim 1, further comprising:
a capacitor for instantaneously providing driving voltage to the controller when the main power source is detached from the system.

3. The power supply circuit of claim 2, wherein, during normal operation, the capacitor is charged by the main power source.

4. The power supply circuit of claim 2 or 3, wherein the capacitor is connected in parallel to the main power source.

5. The power supply circuit of one of claims 1 to 4, wherein the memory is an SDRAM.

6. The power supply circuit of one of claims 1 to 5, wherein the memory receives power from the backup power source when the main power source is detached from the system.

7. The power supply circuit of one of claims 1 to 6, wherein the controller receives power from the backup power source when the main power source is detached from the system.

8. The power supply circuit of one of claims 1 to 7, further comprising:
a main power source detection switch for transmitting a detection signal to the controller when the main power source is detached from the system.

9. A mobile communication terminal equipped with a power supply circuit including a main power source and a backup power source for stably turning off the mobile communication terminal, the power supply circuit comprising:
a first switch for providing a driving voltage from the main power source to the mobile communication terminal;
a second switch for providing a driving voltage from the backup power source to the mobile communication terminal when the main power source is detached from the mobile communication terminal;
a controller for generating a control signal for opening the first switch and closing the second switch when detachment of the main power source from the mobile communication terminal is detected; and
a memory for storing user data.

10. The mobile communication terminal of claim 9, further comprising:
a capacitor for instantaneously providing driving voltage to the controller when the main power source is detached from the mobile communication terminal.

11. The mobile communication terminal of claim 10, wherein, during normal operation, the capacitor is charged by the main power source.

12. The mobile communication terminal of claim 10 or 11, wherein the capacitor is connected in parallel to the main power source.

13. The mobile communication terminal of one of claims 9 to 12, wherein the memory is an SDRAM.

14. The mobile communication terminal of one of claims 9 to 13, wherein the memory receives power from the backup power source when the main power source is detached from the mobile communication terminal.

15. The mobile communication terminal of one of claims 9 to 14, wherein the controller receives power from the backup power source when the main power source is detached from the mobile communication terminal.

16. The mobile communication terminal of one of claims 9 to 15, further comprising:
a main power source detection switch for transmitting a detection signal to the controller when the main power source is detached from the mobile communication terminal.

17. A power supply method for stably turning off a system, comprising the steps of:
providing driving voltage from a capacitor to a controller when a main power source is detached from the system;
providing driving voltage from a backup power source to the system when the main power source is detached from the system; and
performing, by the controller, a refresh command for a memory and then performing a system turn-off operation.

18. The method of claim 17, wherein driving voltage from the backup power source is provided to the system by opening a first switch for supplying main power and closing a second switch for supplying backup power.

19. The method of claim 17 or 18, wherein, during normal operation, the capacitor is charged by the main power source.

20. The method of one of claims 17 to 19, wherein the capacitor is connected in parallel to the main power source.

21. The method of one of claims 17 to 20, wherein the memory is an SDRAM.
